Europäisches Patentamt

European Patent Office

Office européen des brevets

(19)

(11) Publication number: **0 061 893**
**A2**

## (12) EUROPEAN PATENT APPLICATION

(21) Application number: **82301545.8**

(22) Date of filing: **24.03.82**

(51) Int. Cl.³: **B 65 G 39/09**

(30) Priority: **28.03.81 GB 8109796**

(43) Date of publication of application:
**06.10.82 Bulletin 82/40**

(84) Designated Contracting States:
**AT BE CH DE FR GB IT LI LU NL SE**

(71) Applicant: **Garnett, David Morris**
**Manse Lane**
**Knaresborough W. Yorkshire HG5 8LS(GB)**

(72) Inventor: **Garnett, David Morris**
**Manse Lane**
**Knaresborough W. Yorkshire HG5 8LS(GB)**

(74) Representative: **Denmark, James**
**c/o Bailey Walsh & Co. 5 York Place**
**Leeds LS1 2SD Yorkshire(GB)**

(54) **Conveyor rollers.**

(57) The invention provides a roller bearing for a roller of a roller conveyor. The roller bearing is in the form of a pair of interfitting cups with rolling elements therebetween, and a stub shaft locates in the inner cup and is displaceable into the cup against the action of a spring. The outer end of the stub shaft has a head especially for connection to angle iron roller framework. The said head is of non-circular section and fits into a non-circular sectioned aperture in said angle iron so that the head can be turned thereby to lock the stub shaft to the angle iron. In the roller construction, the sleeve body of the roller is frictionally fitted over the outside of the outer race cup. Similar roller bearings are at opposite ends of the sleeve body.

Croydon Printing Company Ltd

-1-

This invention relates to conveyor rollers of a type
which are used in roller decking.

Roller decking is used in industry for the transportation
of articles, such as loaves of bread, boxes of goods,
and the like. The decking is defined by a plurality
of side-by-side rollers and the goods, in moving across
the decking, are supported in turn by the rollers which
rotate for the support and transport of the goods. The
rollers of the decking may be driven or free running.

Conventionally, the rollers of roller decking each
comprise a sleeve at the ends of which are roller
bearings, and extending through the roller and centrally
thereof is a stainless steel spindle, the spindle serving
two functions, firstly to carry the roller bearings, and
secondly to provide a means whereby the roller may be
supported in decking framework by which all of the rollers
of the decking are supported. The known roller decking in
using metal spindles which extend through the sleeve from
end to end, is expensive, and it must be borne in mind
that roller decking will use a large number of the
rollers. Attempts are being made frequently to reduce the
cost of conventional roller decking, and the present
invention seeks to provide a construction which achieves
this objective, in eliminating the central metal spindle.
The invention does however provide, in its preferred form,
a number of auxilliary advantages, one of which being that
the roller bearings at the ends of the sleeve can be
designed so as to prevent in a positive and effective manner, the ingress of any water past the roller bearings into the interior of the sleeve. Finally, there is disclosed an effective means for the mounting of the rollers on the mounting rails of the roller conveyor framework.

In accordance with the present invention, a roller for a roller conveyor comprises a sleeve at the ends of which are roller bearings, and centrally of at least one and preferably each roller bearing is a stub shaft, by which the end of the roller can be supported in conveyor decking framework, said stub shaft being received in a support body and being deflectable towards the centre of the roller against spring action, the stub shaft being provided with means whereby it can be securely engaged with the conveyor decking framework for the effective support of the end of the roller.

Preferably, each stub axle is provided with a support flange which abuts the conveyor decking framework, and a portion of the stub shaft projects through the said framework, and a head at the opposite side of the framework from said lug resiliently presses against the framework, thereby maintaining the stub axle in position.

Alternatively, instead of the said head, the portion of the stub shaft which projects through the framework may be threaded to receive a nut which can be screwed up tight against the other side of the framework thereby firmly to hold the end of the roller in position.

Each roller bearing may comprise an inner race and an outer race, between which are rolling elements enabling the inner race and outer race to rotate one relative to the other in a substantially frictionless manner, and each race may be a cup-shaped member, the inner race receiving the stub shaft and a compression spring, and the outer receiving the inner race, whilst the outer surface of the outer race is friction fitted in the end
of a sleeve body forming the sleeve portion of the roller.
By such construction, the cup-shaped outer race in fact
forms a means positively preventing the ingress of water
into the interior of the sleeve body, which is of
considerable advantage when the roller decking is used in
wet environments, or in any location where the roller
decking must be washed from time to time.

The inner and outer races, and the stub shafts may
conveniently be moulded or otherwise formed or produced in
plastics material.

In a particularly suitable adaptation of the invention,
the ends of the stub shafts have heads which are non-
circular e.g. elongate, and these heads are adapted to
slot through similarly shaped apertures e.g. slots in
supporting guide rails of the framework, and when the
heads are passed through the slots, the stub shafts can be
turned by 90° thereby locking the stub shafts in
position.  Projections on the inner faces of the heads can
serve to form a loading means for stressing the heads
thereby to tension the lugs of the stub shafts against the
inner surfaces of the said rails, for the positive
mounting of the stub shafts on the rails.

Embodiments of the present invention will now be
described, by way of example, with reference to the
accompanying diagrammatic drawings, wherein:

Fig. 1 shows in part sectional elevation a conveyor roller
according to an embodiment of the invention, when mounted
on spaced guide rails of the decking framework;

Figs. 2, 3, 4 and 5 respectively show how the roller
of Fig. 1 is mounted in the decking framework; and

Figs. 6, 7, 8 and 9 respectively show in a manner similar to Figs. 2 to 5, how a modified roller according to a second embodiment of the invention is mounted in conveyor decking framework.

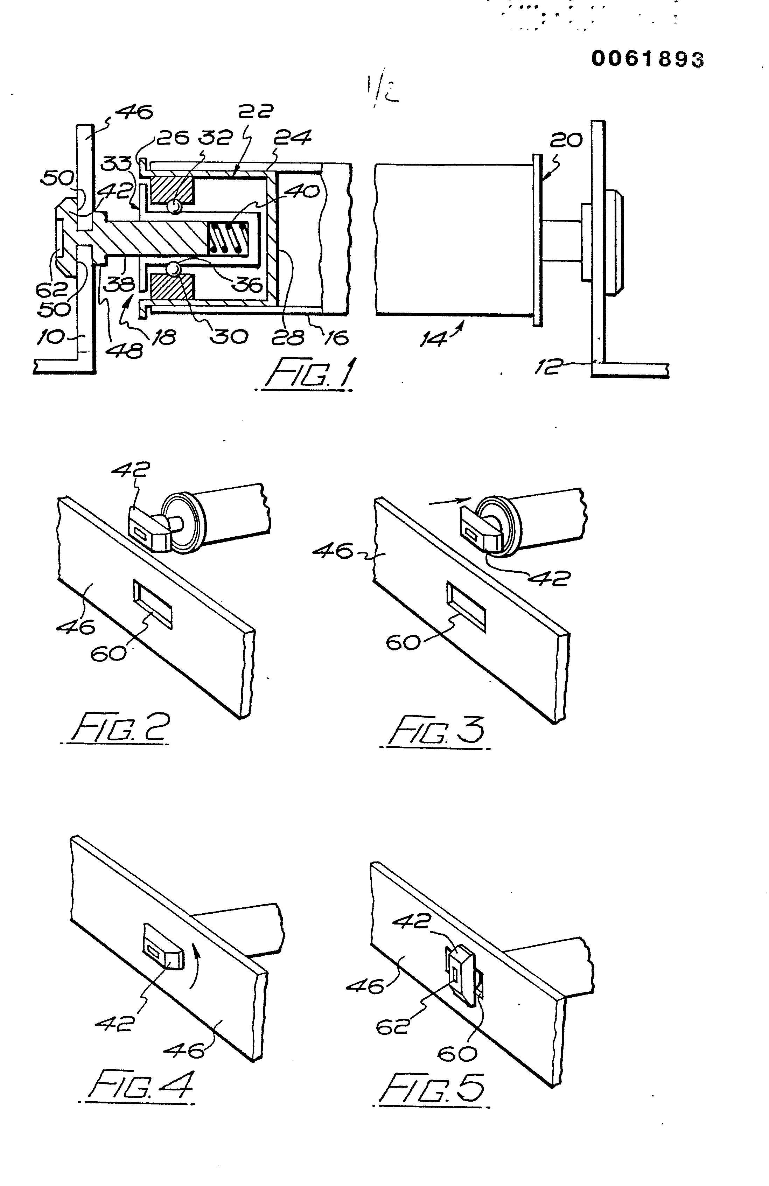

Referring to Fig. 1, roller decking framework is indicated by a pair of angle irons 10 and 12 which follow generally parallel paths and between which are mounted a plurality of conveyor rollers of which one, 14, is illustrated in Fig. 1. The roller 14 comprises a sleeve body 16 in the ends of which are located roller bearings 18, 20. These bearings are identical and only one, bearing 18 which is shown in section will be described in detail. Each bearing is mounted on the respective angle iron 10, 12 in the same fashion.

Referring to the left hand roller bearing in Fig. 1, it will be seen that this comprises an outer race 22, which is in the form of a cup having a cylindrical outer surfce 24, and a top rim 26. The base of the cup is indicated by numeral 28. The cup is friction fitted into the sleeve 16 as shown, and internally the cup is provided with a race track 30 on which run the rolling elements in the form of balls 32 of the roller bearing. The inner race 33, is also in the form of a cup, and its outer surface has a race track 36 for engagement by the balls 32 as shown, whilst slidably received in the inside is a stub shaft 38. A compression spring 40 is located inside the inner race so that the stub shaft 38 in being pushed into the inner race for the purpose to be explained, will compress the spring 40.

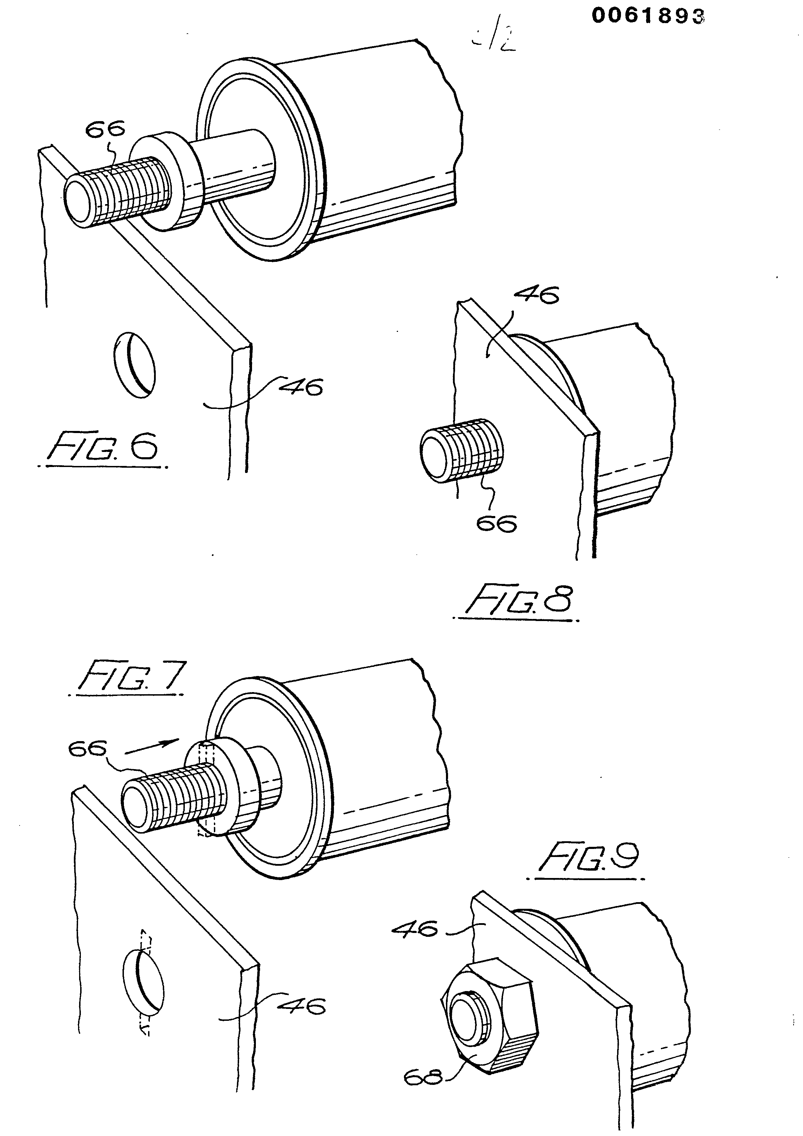

At its outer end, the stub shaft 38 is provided with a head 42 of non-circular - in fact rectangular form in end view, as shown in Figs. 2 to 5, and spaced inwardly from the head 42, by an amount related to the thickness of the web 46 of the angle iron in which the stub shaft engages, is a thrust lug 48. When the shaft is in position, the thrust lug 48 lies firmly against the inside of web 46 as shown, the loading being achieved by means of two projections       50 on the inner face of the head 42, which projections 50 press against the outside of the web 46 when the head is turned to the locked position as will be described more clearly in relation to Figs. 2 to 5. The stub shaft 38 is moulded in synthetic plastics material, and therefore the resiliency of this material gives rise to the grip which is exercised on the web 46 by virtue of the trapping of the web between the said projections 50 and the lug 48. In this position, the spring is substantially free of compression and does not exercise any noticable loading on the inner race of the roller bearing. Such loading would be undesirable as it would inhibit the free rotation of the outer race relative to the inner race.

It is important that the stub shaft should be firmly gripped on the web 46, to provide the effective support for the sleeve 40, because one of the difficulties in utilising stub shafts as supports for the ends of a conveyor roller of conveyor roller decking, is that the stub shafts at the respective ends can become slightly out of axial alignment, and such misalignment prevents free running of the bearings.

Referring now to Fig. 2 to 5, these figures show clearly how the rollers are easily mounted on the angle irons 10 and 12. Only one end of a roller is shown in the interests of simplicity.

In Fig. 2 the roller is shown immediately prior to insertion. In Fig. 3, it is shown how the head 42 and therefore stub shaft 38 is pushed inwardly against the action of spring 40, until the roller end and stub shaft 38 can be located to the inside of the web 46. Whilst the roller is held in this position, it is slipped between the webs 46 of rails 10 and 12 and then the stub shafts are released so that they spring outwardly by virtue of the springs 40 so that the heads 42 of the stub shafts pass through slots 60 in the webs 46 as shown in Fig. 4, such slots being of a shape corresponding to the non-circular shapes of the heds 42. Eventually, the heads 42 are turned through 90° locking the stub shafts in position, at the same time causing the stub shafts to become firmly gripped to the webs 46 as described previously, and as shown in Fig. 5. To enable the turning of the heads 42, they may be provided with slots 62 which are engageable by means of a screw driver or like tool. To remove the rollers for cleaning and repair or replacement, the procedure illustrated in Figs. 2 to 5 is reversed.

Figs. 6 to 9 illustrate how a modified form of roller is mounted on rails 10 and 12. The modification in this case is that instead of the elongated head 42, a cylindrical end of each stub shaft 38 is provided with screw threads 66, and when the threaded portions project through the webs 46 as shown in Fig. 8, the stub shafts are firmly secured to the web portions 46 for the purpose hereinbefore explained, by screwing nuts 68 (Fig. 9.) onto said threaded portion 66 and tightening said nuts 68 against the web portions 46. This construction has the advantage that it is not necessary to provide an elongated head on the stub shafts, nor is it necessary to provide specially shaped apertures in the web portions 46, but it does require the nuts to be screwed onto and unscrewed from the threaded shaft portion.

The various components of the roller bearings, apart from the springs, may be produced in synthetic plastics material.

It is to be noted that it is of considerable advantage in providing the outer race as a cup member, because such member effectively blanks off the interior of the sleeve body, preventing the ingress into the body 16 of water or other liquid which could lead to bacterial growth, a problem encountered in the use of conventional rollers.

In a modified form of the arrangement shown in Figs. 6 to 9, a radial key is provided on the stub shaft, and an appropriate slot is provided on the web 46, as shown in dotted lines and indicated by numerals 70, 72 in Fig. 7 only.

CLAIMS:

1. A roller for a roller conveyor comprising a sleeve at the ends of which are roller bearings, an centrally of at least one and preferably each roller bearing is a stub shaft, by which the end of the roller can be supported in conveyor decking framework, said stub shaft being receivable in a support body and being deflectable towards the centre of the roller against spring action, the stub shaft being provided with means whereby it can be securely engaged with the conveyor decking framework for the effective support of the end of the roller.

2. A roller according to claim 1, wherein each roller bearing has a said stub shaft.

3. A roller according to claim 2, wherein each stub axle is provided with a support flange which abuts the conveyor decking framework, and a portion of the stub shaft projects through said framework, and including means on the end of the stub shaft at the opposite side of the framework for maintaining the stub axle in position.

4. A roller according to claim 3, wherein there is a head at the opposite side of the framework from said lug, said head being for resiliently pressing against the framework to maintain the stub axle in position.

5. A roller according to claim 4, wherein the head is of non-circular section for passing through an aperture of corresponding shape in the framework, so that when the head has been passed through such aperture, it can be turned thereby to effect a locking of the head to the framework.

6. A roller according to claim 5, wherein the head is of rectangular shape, and the support flange is circular, the inner surface of the head having projections for pressing against the outside of the framework.

7.  A roller according to any preceding claim, wherein the spring action is provided by a compression spring which is positioned in the roller bearing so as to exercise little spring loading when the roller is in position with the framework.

8.  A roller according to claim 2 or 3, wherein the portion of the stub shaft which projects through the framework is threaded to receive a nut which can be screwed up tight against the other side of the framework, therby firmly to hold the end of the roller in position.

9.  A roller according to any preceding claim, wherein the roller bearing comprises an inner race and an outer race, between which are rolling elements enabling inner race and outer race to rotate one relative to the other in a substantially frictionless manner each race being a cup shaped memember, the inner race receiving the stub shaft and a compression spring, and the outer race receiving the inner race, whilst the outer surface of the outer race is friction fitted in the end of a sleeve body forming the sleeve portion of the roller.

10.  A roller according to claim 9, wherein the inner and outer races and the stub shafts are moulded or otherwise formed or produced in plastics material.

11. A roller for a roller conveyor substantially as hereinbefore described, with reference to the accompanying drawings.

12.  A roller conveyor including rollers according to any one of the preceding claims, when mounted on the conveyor framework.

13. A roller bearing for use in a roller or roller conveyor, according to any one of the preceding claims, wherein said roller bearing comprises an outer race in the form of a cup and an inner race also in the form of a cup, said inner and outer races being relatively rotatable through rolling elements, and the inner race including a compression spring and receiving a stub shaft which can be displaced inwardly of the cup shape of the inner race against said spring, and the outer end of said stub shaft having a support flange for abutting the conveyor framework, and a non-circular head for passing through a corresponding aperture in the framework whereby the head can be turned thereby to lock the framework between the support flange and the non-circular head.

1/2

FIG.1

FIG.2

FIG.3

FIG.4

FIG.5

66

*FIG. 6*

46

*FIG. 7*

66

46

46

*FIG. 8*

66

*FIG. 9*

46

68